# EUROPEAN PATENT APPLICATION

(11) **EP 4 487 995 A1**
(43) Date of publication of application: **08.01.2025**
(21) Application number: 23763318.5
(22) Date of filing: 21.02.2023
(51) Int. Cl.: B23Q 17/09, B23B 1/00

(54) **MACHINE TOOL**

(30) Priority: 01.03.2022 JP 2022031217
(71) Applicant: Citizen Watch Co., Ltd., Nishitokyo-shi, Tokyo 188-8511 (JP); Citizen Machinery Co., Ltd., Nagano 389-0206 (JP); Chuo University, Tokyo 192-0393 (JP)
(72) Inventor: KITAKAZE, Ayako, Nishitokyo-shi, Tokyo 188-8511 (JP); NAKAYA, Takaichi, Kitasaku-gun, Nagano 389-0206 (JP); SANNOMIYA, Kazuhiko, Kitasaku-gun, Nagano 389-0206 (JP); SUZUKI, Norikazu, Tokyo 112-8551 (JP); TAKAHASHI, Yukio, Tokyo 112-8551 (JP)
(74) Representative: Wittmann, Ernst-Ulrich
(86) International application number: PCT/JP2023/006257
(87) International publication number: WO 2023/167059

(57) **Abstract**

A machine tool is provided, which cuts a workpiece W by concurrently vibrating and moving the workpiece and a tool relatively by using a movement mechanism and a vibration mechanism while rotating a spindle by using a rotation mechanism, and which includes a determination means for determining the degree of wear of a distal end of the tool from a difference between a force component during a forward stroke and a force component during a return stroke in relative vibration of the workpiece and the tool. The force component is a force component of a force that is received by the tool from the workpiece and that is in a direction parallel to the direction of movement by the movement mechanism.

## Description

### [Technical Field]

The present invention relates to a machine tool.

### [Background Art]

With machine tools, one of the important issues is to ascertain the degree of wear of the distal end of a tool to improve machining accuracy. Interrupting machining work to check repeatedly the degree of wear lowers work efficiency, and it is thus desirable to be able to ascertain the degree of wear during machining. In this respect, there are known techniques for providing various sensors and predicting the degree of wear on the basis of the detection results from the sensors (see PTL 1 to PTL 5).

However, in some cases, it may be difficult to arrange the sensors due to space limitations, for example. Also, depending on the use environment, the prediction accuracy may be lowered. As such, there is still room for improvement.

### [Citation List]

### [Patent Literature]

[PTL 1] Japanese Patent Application Publication No. 2000-94273
[PTL 2] Japanese Patent Application Publication No. 2000-135605
[PTL 3] Japanese Patent Application Publication No. 2001-37567
[PTL 4] Japanese Patent Application Publication No. 2005-125480
[PTL 5] Japanese Patent Application Publication No. 2021-130159

### [Summary of Invention]

### [Technical Problem]

An object of the present invention is to provide a machine tool that can suitably ascertain the degree of wear of the distal end of a tool during machining.

### [Solution to Problem]

The present invention adopts the following means to solve the above problems.

That is, a machine tool according to the present invention includes:
a spindle on which a workpiece is to be attached;
a rotation mechanism configured to rotate the spindle;
a tool configured to cut the workpiece;
a movement mechanism configured to move the spindle and the tool relatively; and
a vibration mechanism configured to vibrate the spindle and the tool relatively in a direction parallel to a direction of movement by the movement mechanism
the machine tool being configured to cut the workpiece by concurrently vibrating and moving the workpiece and the tool relatively by using the movement mechanism and the vibration mechanism while rotating the spindle by using the rotation mechanism,
the machine tool further including a determination means for determining a degree of wear of a distal end of the tool from a difference between a force component during a forward stroke and a force component during a return stroke in relative vibration of the workpiece and the tool, the force component being a force component of a force that is received by the tool from the workpiece and that is in a direction parallel to the direction of movement.

According to the present invention, the degree of wear of the distal end of the tool can be determined from the difference between the force component during the forward stroke and the force component during the return stroke in the relative vibration of the workpiece and the tool. In other words, measuring the force component alone allows for determining the degree of wear.

The determination means may determine the degree of wear of the distal end of the tool from the difference between the force component during the forward stroke and the force component during the return stroke within a predetermined range of a cutting thickness in a direction parallel to the direction of movement of the workpiece.

This increases the accuracy in determining the degree of wear.

A relationship between the difference and the degree of wear may be established in advance, and the determination means may determine the degree of wear from the relationship established in advance.

A notification means for externally notifying that wear of the tool has exceeded a predetermined amount when the determination means determines that the degree of wear has exceeded a predetermined threshold may be provided.

This allows the operator to know that the degree of wear has exceeded a predetermined threshold.

Control may be performed to temporarily stop a cutting operation when the determination means determines that the degree of wear has exceeded a predetermined threshold.

As such, machining is less likely to be performed using a worn tool, limiting a decrease in machining accuracy.

The threshold may be set according to a trajectory angle between a tangent to a trajectory of the distal end of the tool in a direction parallel to the direction of movement relative to a rotation direction of the workpiece and a plane perpendicular to the direction of movement.

This allows a more appropriate threshold to be set.

The threshold may be set in accordance with the difference in an initial state of use of the tool.

This allows a more appropriate threshold to be set.

Control may be performed to temporarily stop a cutting operation when the determination means determines that the degree of wear has exceeded a predetermined threshold, and a threshold setting means for setting the threshold again after the temporary stop may be provided.

This allows the threshold to be set again according to the degree of wear that is permitted by the operator.

The threshold setting means may be configured to set, as a threshold, a difference corresponding to a permissible amount of wear input by an operator on the basis of a correlation between a wear width and the difference from an initial stage of use of the tool.

The movement mechanism may include:
a first movement mechanism configured to move the spindle and the tool relatively in an axial direction of the spindle; and
a second movement mechanism configured to move the spindle and the tool relatively in a direction perpendicular to the axial direction,
the vibration mechanism may include:
   a first vibration mechanism configured to vibrate the spindle and the tool relatively in the axial direction of the spindle; and
   a second vibration mechanism configured to vibrate the spindle and the tool relatively in a direction perpendicular to the axial direction, and
   the machine tool has
   a first cutting mode that concurrently vibrates and moves the workpiece and the tool relatively in the axial direction of the spindle by using the first movement mechanism and the first vibration mechanism while rotating the spindle by using the rotation mechanism, and
   a second cutting mode that cuts the workpiece by concurrently vibrating and moving the workpiece and the tool relatively in a direction perpendicular to the axial direction by using the second movement mechanism and the second vibration mechanism while rotating the spindle by using the rotation mechanism.

A measurement means for, in order to derive the difference, measuring a force received by the tool from the workpiece may be provided.

The measurement means may be configured to measure the force received by the tool from the workpiece on a basis of a current value of a motor that drives the movement mechanism.

Furthermore, a machine tool according to the present invention includes:
a spindle on which a workpiece is to be attached;
a rotation mechanism configured to rotate the spindle;
a tool configured to cut the workpiece;
a movement mechanism configured to move the spindle and the tool relatively;
a vibration mechanism configured to vibrate the spindle and the tool relatively in a direction parallel to a direction of movement by the movement mechanism; and
a motor configured to drive the movement mechanism,
the machine tool being configured to cut the workpiece by concurrently vibrating and moving the workpiece and the tool relatively by using the movement mechanism and the vibration mechanism while rotating the spindle by using the rotation mechanism,
the machine tool further including a determination means for determining a degree of wear of a distal end of the tool from a difference between a current value during a forward stroke and a current value during a return stroke in relative vibration of the workpiece and the tool, the current value being generated by the motor when moving the spindle and the tool relatively.

According to the present invention, the degree of wear of the distal end of the tool can be determined from the difference between the motor current value during the forward stroke and the motor current value during the return stroke in the relative vibration of the workpiece and the tool. In other words, the degree of wear can be determined simply by obtaining the current value of the motor.

The determination means may be configured to determine the degree of wear of the distal end of the tool from the difference between the current value during the forward stroke and the current value during the return stroke within a predetermined range of a cutting thickness in a direction parallel to the direction of movement of the workpiece.

This increases the accuracy of determining the degree of wear.

A relationship between the difference and the degree of wear may be established in advance, and the determination means may be configured to determine the degree of wear from the relationship established in advance.

This allows the determination means to determine the degree of wear from the relationship that is established in advance.

The above configurations can be adopted in combination where possible.

### [Advantageous Effects of Invention]

As described above, according to the present invention, the degree of wear of the distal end of a tool can be suitably determined during machining.

### [Brief Description of Drawings]

[Fig. 1]

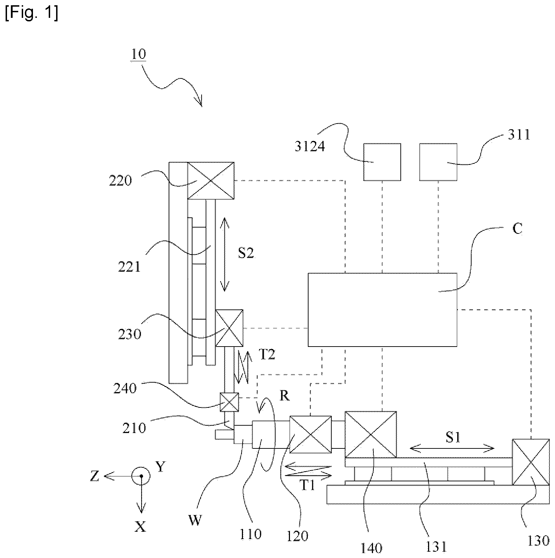

   Fig. 1 is a schematic diagram of a configuration of a machine tool according to an embodiment of the present invention.
[Fig. 2]

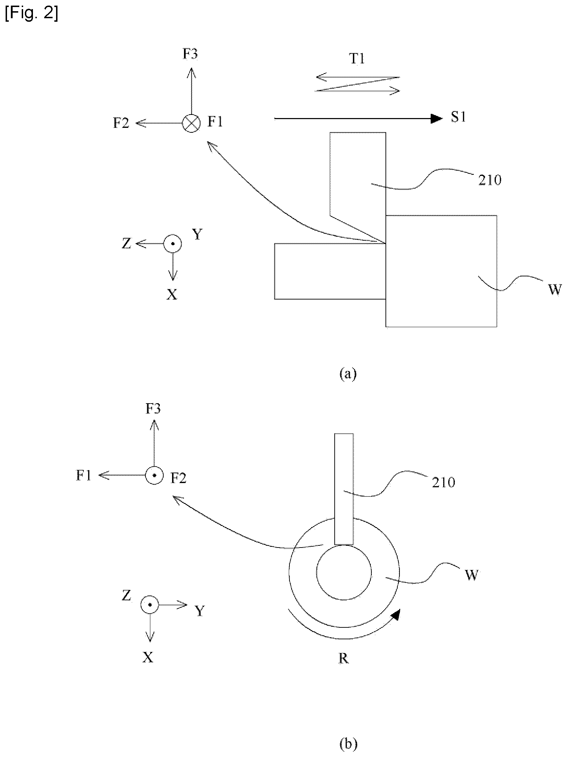

   Fig. 2 is a diagram illustrating an operation in a first cutting mode of the machine tool according to the embodiment of the present invention.
[Fig. 3]

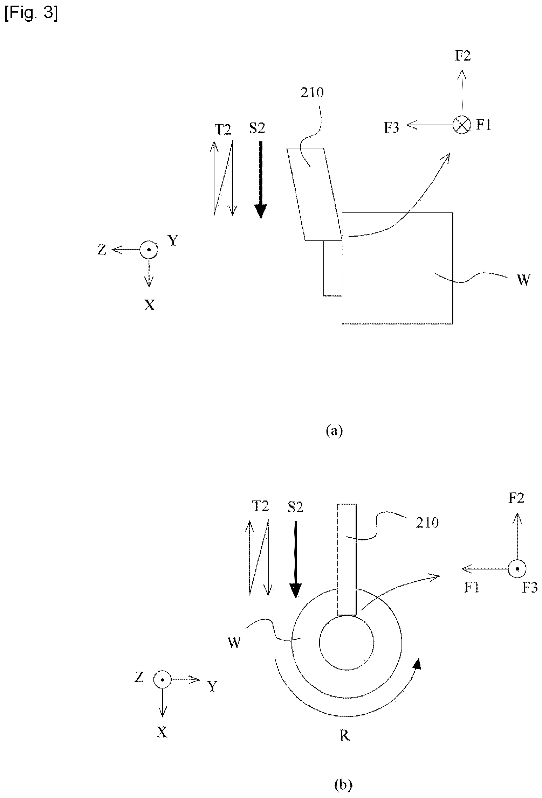

   Fig. 3 is a diagram illustrating an operation in a second cutting mode of the machine tool according to the embodiment of the present invention.
[Fig. 4]

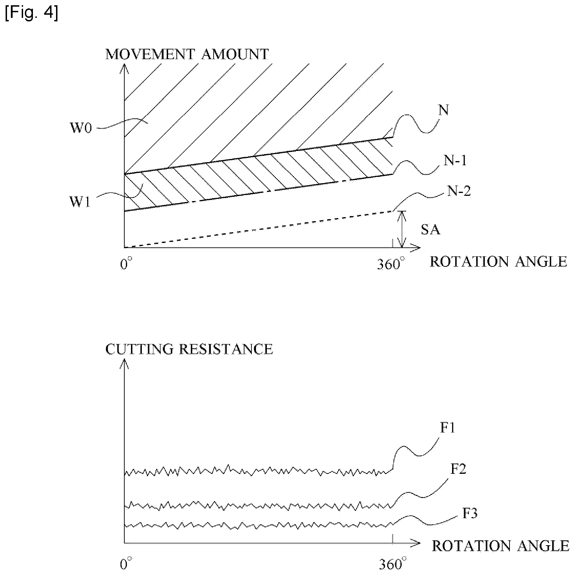

   Fig. 4 is a diagram illustrating cutting characteristics during cutting without vibration.
[Fig. 5]

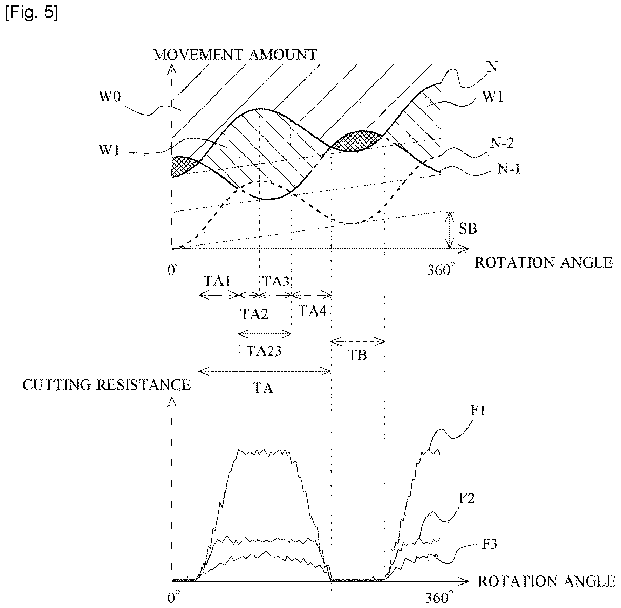

   Fig. 5 is a diagram illustrating cutting characteristics during cutting with vibration.
[Fig. 6]

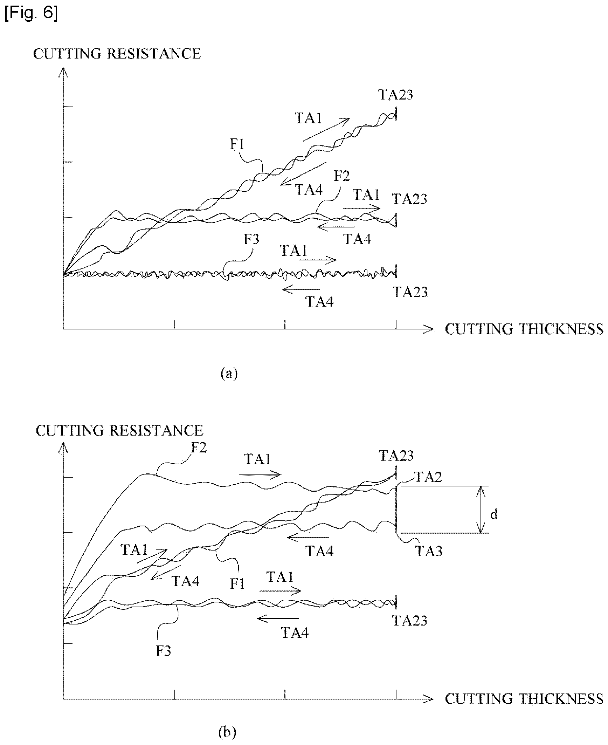

   Fig. 6 illustrates graphs for comparing a tool in the initial stage of use and a worn tool in terms of the fluctuation in cutting resistance.
[Fig. 7]

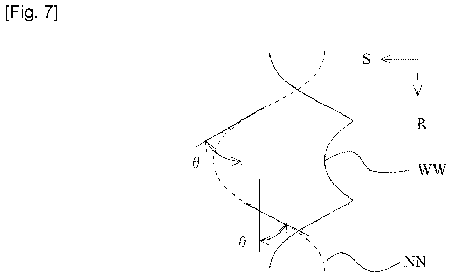

   Fig. 7 is a diagram illustrating a trajectory angle.
[Fig. 8]

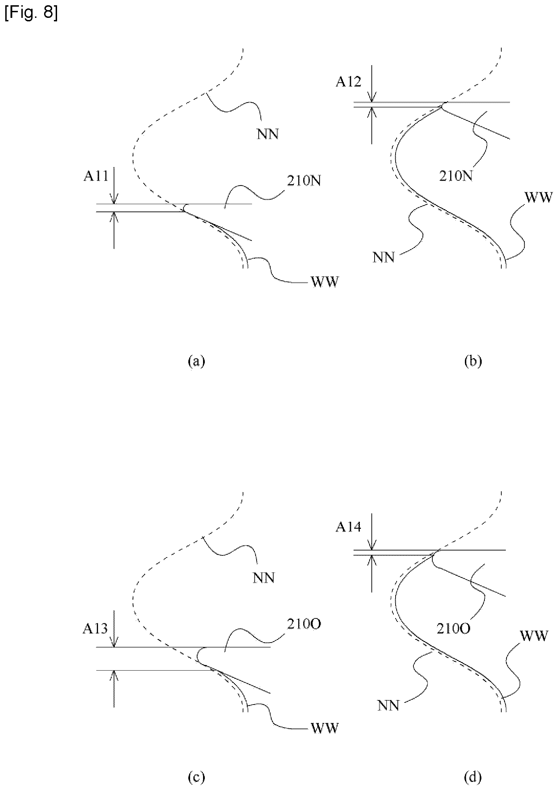

   Fig. 8 is a diagram illustrating a mechanism by which a difference between force components is created.
[Fig. 9]

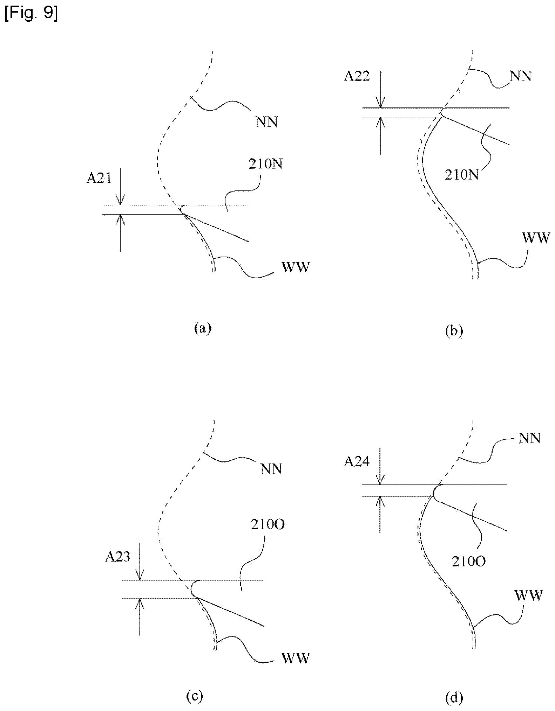

   Fig. 9 is a diagram illustrating a mechanism by which a difference between force components is created.
[Fig. 10]

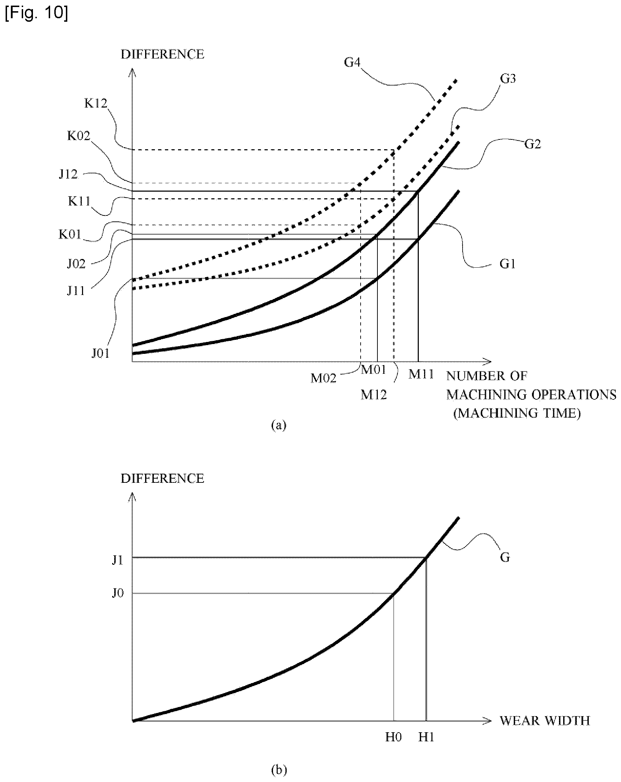

   Fig. 10 is a diagram illustrating how a threshold is set in an embodiment of the present invention.
[Fig. 11]

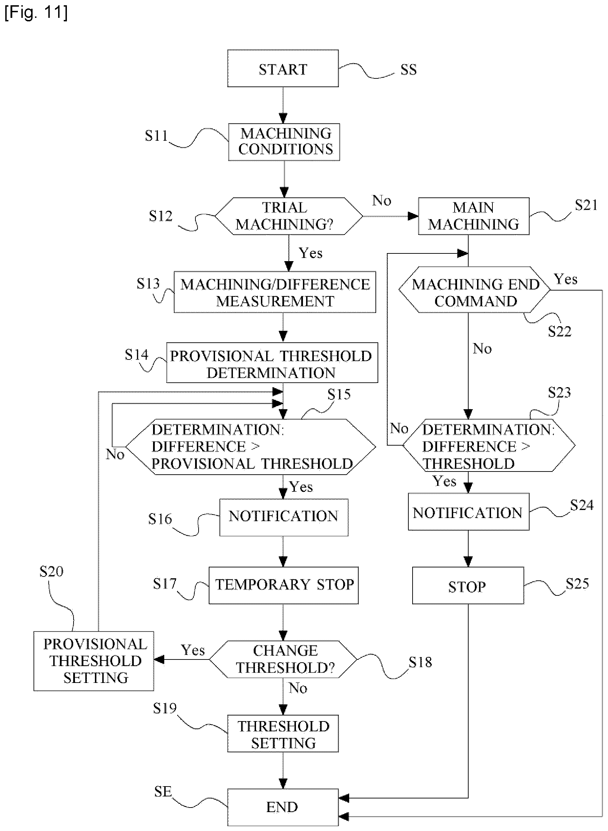

   Fig. 11 is a flowchart showing operation control of a machine tool according to an embodiment of the present invention.
[Fig. 12]

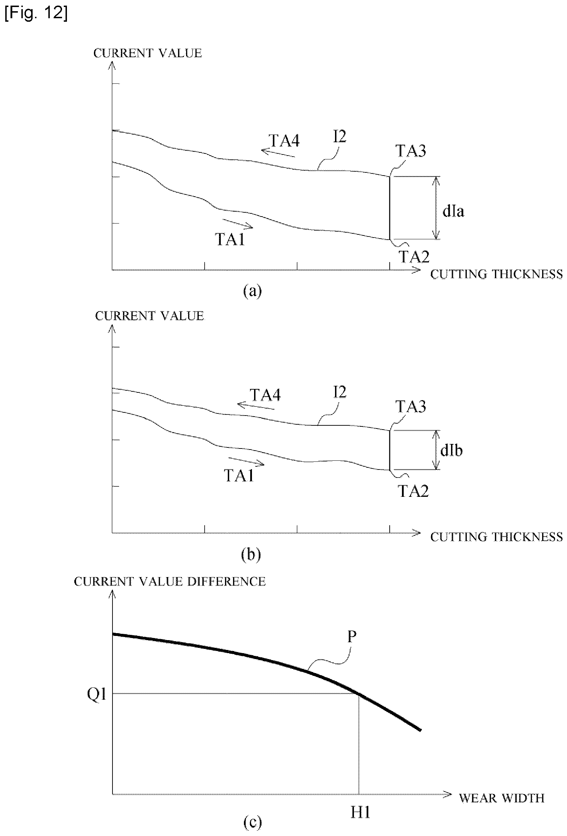

   Fig. 12 is a diagram illustrating fluctuations in the current value of a motor.

### [Description of Embodiments]

Referring to the drawings, exemplary modes for carrying out the present invention will be described in detail using embodiments. However, the dimensions, materials, shapes, relative arrangements, and the like of the components described in these embodiments are not intended to limit the scope of the present invention thereto unless otherwise specified.

### (Embodiments)

Referring to Figs. 1 to 11, a machine tool according to an embodiment of the present invention is now described. For convenience of explanation, Figs. 1 to 3 show directions of three mutually perpendicular axes (X-axis, Y-axis, and Z-axis). The axial direction of a spindle 110 is the Z-axis, and the X-axis and the Y-axis are perpendicular to each other and perpendicular to the Z-axis.

### <Machine Tool Configuration>

Referring to Fig. 1, the configuration of a machine tool 10 according to an embodiment of the present invention is now described. Fig. 1 is a schematic diagram of the configuration of the machine tool 10 according to an embodiment of the present invention, and is a diagram illustrating the configuration of each part in a simplified manner. The machine tool 10 includes a spindle 110, to which a workpiece W is attached, a rotation mechanism 120, which rotates the spindle 110, and a tool (cutting tool) 210, which cuts the workpiece W. A chuck for holding the workpiece W is provided at the distal end of the spindle 110. As the rotation mechanism 120, known techniques such as various motors may be used.

The machine tool 10 also includes a movement mechanism that moves the spindle 110 and the tool 210 relatively. The movement mechanism according to this embodiment includes a first movement mechanism 130 and a second movement mechanism 220. The first movement mechanism 130 is a mechanism for moving the spindle 110 and the tool 210 relatively in the axial direction (Z-axis direction) of the spindle 110. The second movement mechanism 220 is a mechanism for moving the spindle 110 and the tool 210 relatively in a direction perpendicular to the Z-axis direction (X-axis direction). As these movement mechanisms, various known techniques such as a linear servomotor, a ball screw mechanism, or a rack and pinion mechanism can be used.

Furthermore, the machine tool 10 includes a vibration mechanism that vibrates the spindle 110 and the tool 210 relatively in a direction parallel to the direction of movement by the movement mechanism. The vibration mechanism according to this embodiment includes a first vibration mechanism 140 and a second vibration mechanism 230. The first vibration mechanism 140 is a mechanism that vibrates the spindle 110 and the tool 210 relatively in the axial direction (Z-axis direction) of the spindle 110. The second vibration mechanism 230 is a mechanism that vibrates the spindle 110 and the tool 210 relatively in a direction perpendicular to the Z-axis direction (X-axis direction). These vibration mechanisms may use various known techniques that can reciprocally vibrate the vibration target.

The first vibration mechanism 140 is fixed to a moving stage 131, which is configured to be movable in the Z-axis direction by the first movement mechanism 130. The rotation mechanism 120, which rotates the spindle 110, is configured so that it can be vibrated in the Z direction by the first vibration mechanism 140. With the above configuration, the workpiece W is configured to be movable in the Z-axis direction by the first movement mechanism 130 (see arrow S1), configured so that it can be vibrated in the Z-axis direction by the first vibration mechanism 140 (see arrow T1), and configured to be rotatable by the rotation mechanism 120 (see arrow R).

The second vibration mechanism 230 is fixed to a moving stage 221, which is configured to be movable in the X-axis direction by the second movement mechanism 220. As such, the tool 210 is configured to be movable in the X-axis direction by the second movement mechanism 220 (see arrow S2), and is configured so that it can be vibrated in the X-axis direction by the second vibration mechanism 230 (see arrow T2). In this embodiment, a measurement device 240 is provided as a measurement means that measures the force received by the tool 210 from the workpiece W. It should be noted that the measurement means that measures the force received by the tool 210 from the workpiece W is not limited to the measurement device 240. For example, a measurement means may be used that measures the above force by using the fact that the current value of the servomotor used in the movement mechanism varies with the cutting load, or measures the above force using an estimation method using a disturbance observer.

When the above-mentioned force is measured using the current value of the servomotor used in the movement mechanism, in this embodiment, the force in the Z-axis direction received by the tool 210 can be measured using the current value of the servomotor that drives the first movement mechanism 130, which moves the workpiece W in the Z-axis direction, for example. Furthermore, the force received by the tool 210 in the X-axis direction can also be measured using the current value of a servomotor that drives the second movement mechanism 220, which moves the tool 210 in the X-axis direction, for example.

The machine tool 10 includes a controller C, which controls the operations of the various mechanisms described above and also performs calculation on the data obtained from the measurement device 240. The machine tool 10 also includes an input means 311, through which an operator inputs input data such as machining conditions to the controller C, and a notification means 312, which notifies the operator of various types of information obtained by the controller C. Specific examples of the input means 311 include a keyboard, a keypad, and a mouse. Specific examples of the notification means 312 include a light source, a speaker that emits sound, and a display that displays images.

In this embodiment, a case is described in which, in order to move and vibrate the workpiece W and the tool 210 relatively in two axial directions, the workpiece W is configured to be capable of moving and vibrating in the Z-axis direction, and the tool 210 is configured to be capable of moving and vibrating in the X-axis direction. However, the tool 210 may be fixed, and the workpiece W may be configured to be capable of moving and vibrating in two axial directions, so that the workpiece W and the tool 210 are capable of relatively moving and vibrating in two axial directions. Similarly, the workpiece W may be fixed, and the tool 210 may be configured to be capable of moving and vibrating in two axial directions, so that the workpiece W and the tool 210 are capable of relatively moving and vibrating in two axial directions.

In this embodiment, a configuration is described in which the movement mechanism and the vibration mechanism are provided independently and controlled and operated independently. However, a configuration that combines the functions of the movement mechanism and the vibration mechanism may also be adopted. For example, by using a linear servomotor and controlling the linear servomotor to move and vibrate the workpiece W or the tool 210 concurrently, it is possible to perform operations similar to those in a configuration in which the movement mechanism and the vibration mechanism are provided and operated independently.

Furthermore, in this embodiment, a configuration has been described in which the workpiece W and the tool 210 are moved and vibrated relatively in two axial directions. However, a configuration may be adopted in which the workpiece W and the tool 210 are moved and vibrated relatively in three axial directions. That is, in addition to the above configuration, a configuration may be further provided that relatively moves and vibrates the workpiece W and the tool 210 also in the Y-axis direction.

The machine tool 10 configured as described above can cut the workpiece W by concurrently vibrating and moving the workpiece W and the tool 210 relatively using the movement mechanism and the vibration mechanism while rotating the spindle 110 using the rotation mechanism 120. The machine tool 10 according to this embodiment is capable of performing at least cutting machining in a first cutting mode and cutting machining in a second cutting mode. This is described below.

### <Cutting Modes>

Referring to Figs. 2 and 3, the cutting modes are now described. Figs. 2 and 3 are diagrams illustrating operation in cutting modes of a machine tool according to an embodiment of the present invention. Fig. 2 shows the state during operation in the first cutting mode, (a) of this figure shows the workpiece W and the tool 210 as viewed in the Y-axis direction, and (b) of this figure shows them as viewed in the Z-axis direction. Fig. 3 shows the state during operation in the second cutting mode, (a) of this figure shows the workpiece W and the tool 210 as viewed in the Y-axis direction, and (b) of this figure shows them as viewed in the Z-axis direction.

Referring to Fig. 2, the cutting operation in the first cutting mode is first described. In this mode, cutting is performed by concurrently vibrating and moving the workpiece W and the tool 210 relatively using the first movement mechanism 130 and the first vibration mechanism 140 in the Z-axis direction while rotating the spindle 110 using the rotation mechanism 120. The operator may input, into the input means 311, data regarding the number of rotations per unit time of the spindle 110, the feed speed by the first movement mechanism 130 (the feed speed in the direction of arrow S1 in Fig. 2), the radial cutting width, and the vibration frequency and amplitude by the first vibration mechanism 140. As for the data to be input, it may be set such that various data is directly input, or various data is indirectly input. In other words, it may be set such that the data from which the necessary data can be derived through calculation may be input, without requiring the necessary data to be directly input.

Referring to Fig. 3, the cutting operation in the second cutting mode is now described. In this case, cutting is performed by concurrently vibrating and moving the workpiece W and the tool 210 relatively in the X-axis direction using the second movement mechanism 220 and the second vibration mechanism 230, while rotating the spindle 110 using the rotation mechanism 120. The operator may input, into the input means 311, data regarding the number of rotations per unit time of the spindle 110, the feed speed by the second movement mechanism 220 (the feed speed in the direction of arrow S2 in Fig. 3), the axial cutting width, and the vibration frequency and amplitude by the second vibration mechanism 230. As for the data to be input, it may be set such that various data is directly input, or various data is indirectly input as described above.

### <Cutting Characteristics>

Referring to Figs. 4 and 5, the cutting characteristics of the machine tool 10 are described. During cutting operation using the machine tool 10, the tool 210 receives a force (cutting resistance) from the workpiece W. It is known that cutting resistance can be divided into three components, a principal force component F1, a feed force component F2, and a thrust force component F3. In the above-mentioned Figs. 2 and 3, the directions of these force components are also indicated by arrows. The feed force component F2 is a force component in a direction parallel to the direction of relative movement of the spindle 110 and the tool 210, and may be considered as a force acting in the direction opposite to the direction of movement (feed direction) of the tool 210 relative to the workpiece W.

In each of Figs. 4 and 5, the upper graph shows the transition of the relative movement amount of the distal end of the tool 210 for one rotation of the spindle, and the lower graph shows the transition of the cutting resistance (three force components) for one rotation of the spindle. Fig. 4 is a diagram illustrating cutting characteristics during cutting without vibration. In other words, it is a diagram illustrating the cutting characteristics in a situation where cutting machining is performed without vibrating with a vibration mechanism, and it may also be considered as a diagram illustrating the cutting characteristics in cutting using a general machine tool (NC lathe) that does not have a vibration mechanism. Fig. 5 is a diagram illustrating cutting characteristics during cutting with vibration.

In the upper graphs of the figures, solid line N is a graph for the Nth rotation of the spindle 110, dashed dotted line N-1 is a graph for the (N-1)th rotation of the spindle 110, and dotted line N-2 is a graph for the (N-2)th rotation of the spindle 110. Also, in these graphs, W0 indicates a portion of the workpiece W that is not cut by the tool 210 during the Nth rotation of the spindle 110, and W1 indicates a portion of the workpiece W that is cut by the tool 210 during the Nth rotation of the spindle 110. Furthermore, SA and SB indicate the relative movement amount of the tool 210 with respect to the workpiece W by the movement mechanism. When no vibration occurs, SA corresponds to the movement amount (feed amount) of the distal end of the tool 210 for one rotation of the spindle. In contrast, when vibration occurs, in addition to the movement caused by the movement mechanism, the movement amount caused by vibration is added to the movement amount of the distal end of the tool 210 relative to the workpiece W in a superimposed manner. Thus, SB may be considered as the average movement amount (feed amount) of the distal end of the tool 210 for one rotation of the spindle.

In the case of cutting machining that does not involve vibration, it can be seen that the thickness (cutting thickness) of the portion that is cut (the portion that becomes chips) is constant during the rotation of the spindle 110, and that the three force components of the cutting resistance are constant.

In contrast, in the case of cutting machining involving vibration, depending on the vibration conditions (amplitude and frequency), it is possible to provide an idling period during which the tool 210 does not come into contact with the workpiece W while the spindle 110 is rotating, as shown in Fig. 5. In the graphs shown in Fig. 5, TA indicates a period during which the workpiece W is cut by the tool 210, and TB indicates an idling period. This indicates that it is thus possible to break chips into smaller pieces.

Also, within period TA, period TA1 indicates a period during which the cutting thickness gradually increases, period TA23 indicates a period during which the cutting thickness is theoretically constant, and period TA4 indicates a period during which the cutting thickness gradually decreases. Period TA1 and period TA2 in period TA23 indicate periods in which the distal end of the tool 210 relatively moves in a direction to a deeper side into the workpiece W due to vibration of the tool 210 (during a forward stroke). Period TA3 in period TA23 and period TA4 indicate periods in which the distal end of the tool 210 relatively moves in a direction away from the workpiece W due to vibration of the tool 210 (during a return stroke).

It can be seen that the principal force component F1 of the cutting resistance increases in proportion to the cutting thickness during period TA1, is substantially constant during period TA23, and decreases in proportion to the cutting thickness during period TA4. It can be seen that the feed force component F2 increases in proportion to the cutting thickness until halfway through period TA1, then remains substantially constant in period TA23 and until halfway through period TA4, and decreases in proportion to the cutting thickness from halfway through period TA4. It can be seen that the thrust force component F3 is substantially constant throughout the periods TA1, TA23, and TA4.

### <Difference in Feed Force Component Between Forward Stroke and Return Stroke>

The graphs of Fig. 5 indicate that the feed force component F2 is substantially constant during period TA23, in the forward stroke period TA2 and the return stroke period TA3. However, the inventors of the present application have discovered that as the distal end of the tool 210 becomes more rounded over time due to wear, the difference between the feed force component F2 during the forward stroke and the feed force component F2 during the return stroke gradually increases. This is described referring to Figs. 6 to 9.

Fig. 6 shows graphs indicating the relationship between cutting thickness and cutting resistance, in which (a) of the figure is a graph for the initial stage of use of the tool 210 (when the tool 210 is new), and (b) of the figure is a graph for a state in which the distal end of the tool 210 is worn and has a large degree of roundness. In each graph, the fluctuations of the principal force component F 1, the feed force component F2, and the thrust force component F3 of the cutting resistance are shown. Arrows TA1 and TA4 in the graphs correspond to the fluctuations in periods TA1 and TA4, respectively, shown in Fig. 5, and arrows TA23, TA2, and TA3 correspond to the fluctuations in periods TA23, TA2, and TA3, respectively, shown in Fig. 5.

The following can be seen from Fig. 6. First, it can be seen that, compared to the new tool 210, the tool 210 with a large degree of wear (degree of roundness) at the distal end has greater three force components of cutting resistance. It can also be seen that the new tool 210 exhibits substantially no difference between the forward stroke and the return stroke in terms of the three force components of the cutting resistance. In contrast, as for the tool 210 with a large degree of wear at the distal end, it can be seen that, of the three force components of the cutting resistance, the principal force component F1 and the thrust force component F3 exhibit substantially no difference between the forward and return strokes, but the feed force component F2 exhibits a difference d between the forward and return strokes.

Referring to Figs. 7 to 9, study results are now described concerning the cause of the gradual increase in the difference between the feed force component F2 during the forward stroke and the feed force component F2 during the return stroke that occurs as the roundness of the distal end of the tool 210 increases over time due to wear.

Before describing the study results, the trajectory angle θ is described referring to Fig. 7. In the figure, arrow S indicates the direction of movement of the tool 210 relative to the workpiece W, and arrow R indicates the direction of rotation of the spindle 110 and workpiece W. Also, solid line WW indicates the surface of the workpiece W, and dotted line NN indicates the trajectory of the distal end of the tool 210. As shown in the figure, the trajectory angle θ is defined as the angle between a tangent to the trajectory NN of the distal end of the tool 210 in a direction parallel to the direction of movement S relative to the rotation direction of the workpiece W and a plane perpendicular to the direction of movement S. The trajectory angle of the tool 210 in the forward stroke is defined as a positive trajectory angle, and the trajectory angle in the return stroke is defined as a negative trajectory angle.

Figs. 8 and 9 show the trajectory NN of the distal end of the tool 210 and the state of the surface WW of the workpiece W being cut by the tool 210. In Figs. 8 and 9, (a) and (b) show cases of a new tool 210N, while (c) and (d) show cases of a tool 2100 that is worn. Also, (a) and (c) show cases in which the trajectory angle θ is positive (cases of the forward stroke), and (b) and (d) show cases in which the trajectory angle θ is negative (case of the return stroke). Of Figs. 8 and 9, the former shows cases in which the maximum trajectory angle θ is larger than in the latter.

Immediately after the surface WW of the workpiece W is cut by the tool 210, the portion that was pressed by the tool 210 elastically returns and moves back slightly in the direction opposite to the direction of movement (feed direction) of the tool 210 relative to the workpiece W. The feed force component F2 corresponds to the reaction force received by the distal end of the tool 210 from the workpiece W in the direction opposite to the feed direction, and is larger when the area of contact between the distal end of the tool 210 and the workpiece W is larger. A11, A12, A13, A14, A21, A22, A23, and A24 in Figs. 8 and 9 indicate the contact width between the distal end of the tool 210 and the workpiece W, and are substantially proportional to the area of contact.

The following can be seen geometrically from Figs. 8 and 9. The contact area is smaller when the trajectory angle θ is negative than when it is positive. This difference in contact area is larger in the case of the worn tool 2100 than in the case of the new tool 210N, and is also larger when the maximum trajectory angle θ is larger.

From the above, it can be identified that as the distal end of the tool 210 becomes more rounded over time due to wear, the difference between the feed force component F2 during the forward stroke and the feed force component F2 during the return stroke gradually increases. It can also be identified that a greater maximum trajectory angle θ increases the above difference.

According to the knowledge obtained as described above, by measuring (monitoring) the fluctuation of the feed force component during machining, the degree of wear (degree of roundness) of the tool distal end can be determined. As such, on the basis of the data obtained from the measurement device 240, the controller C can function as a determination means that determines the degree of wear of the distal end of the tool 210 from the difference between the feed force component F2 during the forward stroke and the feed force component F2 during the return stroke. In other words, measuring the force component alone allows the degree of wear of the tool distal end to be determined during machining. As a result, it is possible to limit a decrease in the machining accuracy by prompting the operator to replace the tool 210 when the degree of wear reaches a certain level. A specific technique is described below.

### <Machine Tool Operation Control>

Referring to Figs. 10 and 11, the operation control of the machine tool 10 is described. Fig. 10 is a diagram illustrating how a threshold is set in an embodiment of the present invention. Fig. 11 is a flowchart showing operation control of a machine tool according to an embodiment of the present invention.

The relationship between the difference between the feed force component F2 during the forward stroke and the feed force component F2 during the return stroke and the degree of wear of the distal end of the tool 210 can be established in advance by analysis or experimental measurements. This allows the controller C, which functions as a determination means, to determine the degree of wear of the distal end of the tool 210 from the relationship established in advance. That is, by storing the above relationship in a memory portion of the controller C, the controller C can determine the degree of wear of the distal end of the tool 210 on the basis of the data obtained from the measurement device 240. When the controller C determines that the degree of wear (difference) exceeds a predetermined threshold, the notification means 312 can externally notify that wear of the tool 210 has exceeded a predetermined amount. This allows the operator to know that the wear of the tool 210 has exceeded the predetermined amount. The notification can be made by flashing a light source, emitting a sound through a speaker, or showing a message on a display. Also, when the controller C determines that the degree of wear exceeds the predetermined threshold, control is preferably performed to stop the cutting operation. This limits a decrease in the machining accuracy that would be caused by the continued cutting operation using the worn tool 210.

Here, as for the difference used by the controller C to perform determination, it is preferable to use the difference between the force component during the forward stroke and the force component during the return stroke within a predetermined range of the cutting thickness in a direction parallel to the direction of movement of the workpiece W (the direction of movement by the movement mechanism). As a specific suitable example, referring to Fig. 5, it is preferable to use the difference between the feed force component F2 during the forward stroke (in period TA2) and the feed force component F2 during the return stroke (in period TA3) in period TA23, in which the cutting thickness is theoretically constant. For example, the difference between the feed force component F2 at a certain point in time within period TA2 and the feed force component F2 at a certain point in time within period TA3 can be used. Also, the difference between the maximum value of the feed force component F2 in period TA2 and the minimum value of the feed force component F2 in period TA3 can also be used. Furthermore, the difference between the average value of the feed force component F2 in period TA2 and the average value of the feed force component F2 in period TA3 can also be used. Using the above-described difference for determination can improve the accuracy of the determination of the degree of wear.

The above threshold can be set in advance on the basis of analysis, experimental measurements, and generally required machining accuracy. However, since the required machining accuracy varies depending on the processed product, the threshold is preferably set according to the required machining accuracy in order to minimize the need for replacement of the tool 210. To this end, it is preferable to set a provisional threshold based on the generally required machining accuracy and to have the operator check the actual degree of wear of the distal end of the tool 210 when the provisional threshold is exceeded so that the operator can set the threshold again.

Specific examples are described below concerning how to set a provisional threshold, how to reset the threshold, and operation control. Fig. 10(a) is a graph showing the relationship between the number of machining operations (machining time) and the difference between the feed force component F2 during the forward stroke and the feed force component F2 during the return stroke. As is evident, the degree of wear (degree of roundness) of the distal end of the tool 210 increases as the number of machining operations (machining time) increases. Fig. 10(b) is a graph showing the relationship between the wear width and the above difference from the initial state of the distal end of the tool 210.

The above study results indicate that a large degree of roundness of the distal end creates the above difference even with a new tool 210. In Fig. 10(a), solid line graphs G1 and G2 indicate cases in which the distal end of the tool 210 is new and unworn and has a small degree of roundness. In contrast, dotted line graphs G3 and G4 indicate cases in which the distal end of the tool 210 is new and unworn and has a relatively large degree of roundness. As described above, the greater the maximum trajectory angle θ, the greater the difference. Graph G2 shows a case in which the maximum trajectory angle θ is greater than that of graph G1, and graph G4 shows a case in which the maximum trajectory angle θ is greater than that of graph G3.

For the tools 210 corresponding to graphs G1 and G2, when the number of machining operations (machining time) corresponding to the permissible value of the degree of wear based on the generally required machining accuracy is M01, the provisional threshold may be J01 for graph G1 and J02 for graph G2. Then, when the provisional threshold is exceeded, the operator can observe (measure) the degree of wear of the distal end of the tool 210, determine to what extent the threshold can be increased with reference to the degree of wear that is based on the machining accuracy required for the processed product, and then reset the threshold. For example, by setting the number of machining operations to M11, the threshold can be set again to J11 for graph G1 and J12 for graph G2.

Likewise, for the tools 210 corresponding to graphs G3 and G4, when the number of machining operations corresponding to the permissible value of the degree of wear based on the generally required machining accuracy is M02, the provisional threshold may be K01 for graph G3 and K02 for graph G4. Then, when the provisional threshold is exceeded, the operator can observe (measure) the degree of wear of the distal end of the tool 210, determine to what extent the threshold can be increased with reference to the degree of wear that is based on the machining accuracy required for the processed product, and then reset the threshold. For example, by setting the number of machining operations to M12, the threshold can be set again to K11 for graph G3 and K12 for graph G4.

It should be noted that the above graphs G1, G2, G3, and G4 are merely examples. The controller C may store the correspondence relationship between the number of machining operations and the difference for each type of tool 210 that may be used, so as to accommodate the degree of roundness of the distal end of the tool in the initial state of use, and to accommodate the trajectory angle θ that may be set. This allows the provisional threshold to be set according to the tool 210 that is used and the trajectory angle θ that is set. In addition to the degree of roundness in the initial state of use of the distal end of the tool 210, the provisional threshold can be set according to various types of information such as the machining conditions, tool conditions (such as the shape and material of the tool), and the material of the workpiece W. As an example of the machining conditions, the provisional threshold can be set taking into account the fact that the difference in feed force component changes depending on the amount of cutting. As an example of the tool conditions, the provisional threshold can be set taking into account the fact that the difference in feed force component changes when the clearance angle becomes small.

Here, simply providing the operator with a provisional threshold when the provisional threshold is exceeded may be insufficient to enable determination of an extent to which the threshold can be increased with reference to the degree of wear that is based on the machining accuracy required for the processed product. For this reason, it is preferable to allow the operator to input a permissible wear width so that the threshold can be set. This is described referring to the graph of Fig. 10(b) indicating the correlation between the wear width and the above difference from the initial stage of use of the tool 210. In graph G shown in Fig. 10(b), J0 is the provisional threshold, and H0 is the wear width at the point when the provisional threshold is reached. It is known that wear tends to progress at the flank surface (the surface of the tool 210 that comes into contact with the workpiece W during machining) of the distal end of the tool 210, and the wear width refers to the wear width of the flank surface. The relationship between wear width and difference can be predicted by temporarily stopping the machining operation when the difference reaches the provisional threshold J0 and by having the operator measure the wear width and input the measurement result. Graph G is a graph of the equation of the predicted relationship. Then, the threshold can be set by having the operator input a permissible amount of wear. H1 is the permissible amount of wear input by the operator, and J1 is the threshold that is reset.

Referring to Fig. 11, the operation flow of the machine tool 10 is now described. When an operation of the machine tool 10 is started (step SS), the operator inputs the machining conditions into the input means 311 (step S11). From the information input by the operator, the controller C determines whether the machining is trial machining (step S12). When new machining is performed (such as when the input information is new information), it is determined that the machining is trial machining. When it is determined that the machining is trial machining, as the machining operation starts, the controller C measures (calculates) the above-described difference between the feed force component F2 during the forward stroke and the feed force component F2 during the return stroke on the basis of the data obtained from the measurement device 240 (step S13). Then, the controller C determines a provisional threshold on the basis of the degree of roundness of the distal end of the tool 210 in the initial state of use and the trajectory angle θ calculated from the input data (step S14). As described above, the provisional threshold can be determined on the basis of other information.

The controller C then successively determines whether the difference exceeds the provisional threshold during the machining operation (step S15). When the difference exceeds the provisional threshold, the controller C causes the notification means 312 to externally notify the operator that the wear of the tool 210 has exceeded the predetermined amount (step S16). The controller C also temporarily stops the machining operation (S17). This allows the operator to check the degree of wear of the distal end of the tool 210. For example, the operator measures the wear width on the flank surface as described above. Then, the operator determines the permissible amount of wear according to the machining accuracy required for the processed product, and determines whether to change the threshold. The manner in which the threshold is set when changing the threshold is as described above.

The operator inputs into the input means 311 whether the threshold is to be changed, and the threshold if the threshold is to be changed. If the threshold is not to be changed, the controller C sets the provisional threshold as the final threshold (step S19). Furthermore, when the threshold is to be changed, the controller C sets as the new provisional threshold the threshold that is set again (step S20). As such, the controller C has a function as a threshold setting means for setting the threshold again.

When a new provisional threshold is set at step S20, the process returns to step S15, and the operations from step S15 to step S18 are repeated until it is determined at step S18 that the threshold is not to be changed. At step S19, when the threshold is set, the operation ends (step SE).

Then, when the machining operation is resumed (step SS), it is possible to set such that input of the machining conditions (step S 11) can be omitted. If it is determined at step S12 that the machining is not trial machining, main machining is performed on the basis of the machining conditions that are already input (step S21). When the main machining is started, the controller C successively determines whether a machining end command signal is transmitted (step S22). That is, when the main machining is to be ended, for example, the operator presses an end button, causing a machining end command signal to be transmitted to the controller C. When the controller C determines that a machining end command signal has been transmitted, the operation ends (step SE). Unless the controller C receives a machining end command signal, the controller C successively determines whether the difference exceeds the threshold set at step S19 (step S23). When the difference exceeds the threshold, the controller C causes the notification means 312 to externally notify the operator that the wear of the tool 210 has exceeded the predetermined amount (step S24). The controller C also stops the machining operation (S25), and the operation ends (step SE).

In this case, the operator replaces the tool 210 with a new one and then resumes the machining operation (step SS). Then, at step S21, the machining conditions may be input again, or it may be set such that the previously input data is maintained as is. The subsequent operation procedure is as described above.

### (Modification)

In the above embodiment, the wear of the distal end of wear of the tool 210 is determined from the difference between the feed force component F2 during the forward stroke and the feed force component F2 during the return stroke. However, the parameter used to determine wear does not necessarily have to be the feed force component F2 itself, and may be another parameter that has a correlation with the feed force component F2. In other words, determining the degree of wear of the distal end of the tool 210 from the difference between the feed force component F2 during the forward stroke and the feed force component F2 during the return stroke includes cases in which the degree of wear is determined using the difference in a parameter that has a correlation with the feed force components F2 during the forward stroke and the return stroke. Referring to Fig. 12, as a method for determining wear according to a modification of the present invention, a method is described that determines the degree of wear of the distal end of a tool on the basis of the current value of a servomotor. Fig. 12 is a diagram illustrating fluctuations in the current value of the motor.

When a servomotor is used as the drive source for the movement mechanism that relatively moves the tool 210 and the spindle 110, the current value of the servomotor has a correlation with the feed force component F2. For example, under certain vibration conditions of a certain machine tool, when the movement mechanism is driven to relatively move the tool 210 and the spindle 110 in a direction that increases the feed force component F2, the current value of the servomotor serving as the drive source of the movement mechanism decreases. When the movement mechanism is driven to relatively move the tool 210 and the spindle 110 in a direction that reduces the feed force component F2, the current value of the servomotor serving as the drive source of the movement mechanism increases. For example, when the feed direction of the tool 210 is the Z-axis direction, the feed force component F2 acting in the Z-axis direction has a negative correlation with the current value I2 of the servomotor that drives the first movement mechanism 130, which relatively moves the tool 210 and the spindle 110 in the Z-axis direction. As the distal end of the tool 210 becomes more rounded over time due to wear, the difference between the current value I2 during the forward stroke and the current value I2 during the return stroke gradually becomes smaller.

A method is described below that determines, in a situation where the feed direction of the tool 210 is the Z-axis direction, the degree of wear of the distal end of the tool 210 by using the current value I2, which has a negative correlation with the feed force component F2, of the servomotor driving the first movement mechanism 130. Fig. 12(a) is a graph showing the relationship between the cutting thickness and the current value I2 obtained when the tool 210 is in the initial stage of use (when the tool 210 is new). Fig. 12(b) is a graph showing the relationship between the cutting thickness and the current value I2 obtained when the distal end of the tool 210 is worn and has a large degree of roundness. Fig. 12(c) is a graph showing the relationship between the wear width and the difference between the current value I2 during the forward stroke and the current value I2 during the return stroke from the initial state of the distal end of the tool 210. Arrows TA1 and TA4 in the graph correspond to the fluctuations in periods TA1 and TA4, respectively, shown in Fig. 5. Arrows TA2 and TA3 correspond to the fluctuations in periods TA2 and TA3, respectively, shown in Fig. 5.

As shown in Fig. 12(a) and Fig. 12(b), in period TA1, in which the cutting thickness gradually increases and the feed force component F2 gradually increases, the current value I2 gradually decreases. In contrast, in period TA4, in which the cutting thickness gradually decreases and the feed force component F2 gradually decreases, the current value I2 gradually increases. This creates a difference between the current value I2 during the forward stroke in period TA2 and the current value I2 during the return stroke in period TA3.

It can be seen from Fig. 12 that the difference between the current value I2 during the forward stroke and the current value I2 during the return stroke gradually decreases as the distal end of the tool 210 becomes more rounded over time due to wear. In other words, it can be seen that there is a relationship of dIa > dIb when the difference between the forward and return strokes in terms of the servomotor current value I2 for a new tool 210 is dIa, and the above difference for a tool 210 with a large degree of wear at the distal end is dIb.

As described above, as the distal end of the tool 210 becomes more rounded over time due to wear, the difference between the current value I2 during the forward stroke and the current value I2 during the return stroke gradually decreases. As such, there is a negative correlation between the wear width of the distal end of the tool 210 and the difference dI in the current value I2 of the servomotor between the forward stroke and the return stroke. By using this correlation, the degree of wear of the distal end of 210 of the tool can be determined on the basis of the difference in the current value I2 instead of the difference in the feed force component F2.

When the current value I2 is used to determine the degree of wear of the distal end of the tool 210, it is preferable to temporarily stop the machining operation and prompt the operator to replace the tool 210 when the difference dI in the current value I2 between the forward and return strokes reaches a threshold Q1, for example. In graph P shown in Fig. 12(c), H1 is the wear width at the point when the difference dI in the current value I2 reaches the threshold Q1. Graph P is a graph of the predicted relationship equation, and can be set in advance on the basis of analysis or experiments. This configuration allows the operator to suitably determine the degree of wear of the distal end of the tool during machining, thereby limiting a decrease in work efficiency. Also, a method of setting a provisional threshold as in the above embodiment is desirable.

As described above, by obtaining (monitoring) the motor current value, which has a correlation with the feed force component, the degree of wear (degree of roundness) of the tool distal end can be determined. Furthermore, by providing a detection means for detecting the current value I2 of the servomotor, the controller C can function as a determination means for determining the degree of wear of the distal end of the tool 210 from the difference between the current value I2 during the forward stroke and the current value I2 during the return stroke. In other words, the degree of wear of the tool distal end can be determined during machining simply by obtaining the current value of the servomotor. As a result, it is possible to limit a decrease in the machining accuracy by prompting the operator to replace the tool 210 when the degree of wear reaches a certain level. This also eliminates the need for the conversion of the servomotor current value into a force component to determine the degree of wear of the tool distal end.

In the above-described modification, the degree of wear of the tool distal end is determined on the basis of the current value of the servomotor of the first movement mechanism 130, but the current value to be used is not limited to the above-described current value. For example, the degree of wear may be determined on the basis of the sum of the current value of the servomotor of the first movement mechanism 130 and the current value of the servomotor of the first vibration mechanism 140, which both drive the spindle 110 in the Z-axis direction. Furthermore, when the feed direction of the tool 210 is the X-axis direction, the degree of wear may be determined on the basis of the current value of the servomotor of the second movement mechanism 220 or the current value of the servomotor of the second vibration mechanism 230.

In the above-described modification, the degree of wear of the tool distal end is determined using the current value of a servomotor instead of the feed force component, but the parameter to be used is not limited to the current value of a servomotor. For example, the parameter used to determine the degree of wear may be an equivalent of the servomotor current value or a value that can be obtained by an estimation method using a disturbance observer. In other words, by using a parameter that has a correlation with the feed force component and exhibits a difference in value between the forward and return strokes of the tool 210 in a similar manner as the feed force component, the degree of wear of the tool distal end can be determined during machining.

### [Reference Signs List]

10 Machine tool
110 Spindle
120 Rotation mechanism
130 First movement mechanism
131 Moving stage
140 First vibration mechanism
210, 210N, 2100 Tool
220 Second movement mechanism
221 Moving stage
230 Second vibration mechanism
240 Measurement device
311 Input means
312 Notification means
C Controller
F1 Principal force component
F2 Feed force component
F3 Thrust force component
W Workpiece

## Claims

1. A machine tool comprising:
a spindle on which a workpiece is to be attached;
a rotation mechanism configured to rotate the spindle;
a tool configured to cut the workpiece;
a movement mechanism configured to move the spindle and the tool relatively; and
a vibration mechanism configured to vibrate the spindle and the tool relatively in a direction parallel to a direction of movement by the movement mechanism,
the machine tool being configured to cut the workpiece by concurrently vibrating and moving the workpiece and the tool relatively by using the movement mechanism and the vibration mechanism while rotating the spindle by using the rotation mechanism, and
the machine tool further comprising a determination means for determining a degree of wear of a distal end of the tool from a difference between a force component during a forward stroke and a force component during a return stroke in relative vibration of the workpiece and the tool, the force component being a force component of a force that is received by the tool from the workpiece and that is in a direction parallel to the direction of movement.

2. The machine tool according to claim 1, wherein the determination means determines the degree of wear of the distal end of the tool from the difference between the force component during the forward stroke and the force component during the return stroke within a predetermined range of a cutting thickness in a direction parallel to the direction of movement of the workpiece.

3. The machine tool according to claim 1, wherein a relationship between the difference and the degree of wear is established in advance, and the determination means is configured to determine the degree of wear from the relationship established in advance.

4. The machine tool according to claim 1, further comprising a notification means for externally notifying that wear of the tool has exceeded a predetermined amount when the determination means determines that the degree of wear has exceeded a predetermined threshold.

5. The machine tool according to claim 1, wherein control is performed to stop a cutting operation when the determination means determines that the degree of wear has exceeded a predetermined threshold.

6. The machine tool according to claim 4, wherein the threshold is set according to a trajectory angle between a tangent to a trajectory of the distal end of the tool in a direction parallel to the direction of movement relative to a rotation direction of the workpiece and a plane perpendicular to the direction of movement.

7. The machine tool according to claim 4, wherein the threshold is set according to the difference in an initial state of use of the tool.

8. The machine tool according to claim 1, wherein control is performed to temporarily stop a cutting operation when the determination means determines that the degree of wear has exceeded a predetermined threshold,
the machine tool further comprising a threshold setting means for setting the threshold again after the temporary stop.

9. The machine tool according to claim 8, wherein the threshold setting means is configured to set, as a threshold, a difference corresponding to a permissible amount of wear input by an operator on the basis of a correlation between a wear width and the difference from an initial stage of use of the tool.

10. The machine tool according to claim 1, wherein
the movement mechanism includes:
a first movement mechanism configured to move the spindle and the tool relatively in an axial direction of the spindle; and
a second movement mechanism configured to move the spindle and the tool relatively in a direction perpendicular to the axial direction,
the vibration mechanism includes:
a first vibration mechanism configured to vibrate the spindle and the tool relatively in the axial direction of the spindle; and
a second vibration mechanism configured to vibrate the spindle and the tool relatively in a direction perpendicular to the axial direction, and
the machine tool has
a first cutting mode that concurrently vibrates and moves the workpiece and the tool relatively in the axial direction of the spindle by using the first movement mechanism and the first vibration mechanism while rotating the spindle by using the rotation mechanism, and
a second cutting mode that cuts the workpiece by concurrently vibrating and moving the workpiece and the tool relatively in a direction perpendicular to the axial direction by using the second movement mechanism and the second vibration mechanism while rotating the spindle by using the rotation mechanism.

11. The machine tool according to any one of claims 1 to 10, further comprising a measurement means for, in order to derive the difference, measuring a force received by the tool from the workpiece.

12. The machine tool according to claim 11, wherein the measurement means is configured to measure the force received by the tool from the workpiece on a basis of a current value of a motor that drives the movement mechanism.

13. A machine tool comprising:
a spindle on which a workpiece is to be attached;
a rotation mechanism configured to rotate the spindle;
a tool configured to cut the workpiece;
a movement mechanism configured to move the spindle and the tool relatively;
a vibration mechanism configured to vibrate the spindle and the tool relatively in a direction parallel to a direction of movement by the movement mechanism; and
a motor configured to drive the movement mechanism,
the machine tool being configured to cut the workpiece by concurrently vibrating and moving the workpiece and the tool relatively by using the movement mechanism and the vibration mechanism while rotating the spindle by using the rotation mechanism,
the machine tool further comprising a determination means for determining a degree of wear of a distal end of the tool from a difference between a current value during a forward stroke and a current value during a return stroke in relative vibration of the workpiece and the tool, the current value being generated by the motor when moving the spindle and the tool relatively.

14. The machine tool according to claim 13, wherein the determination means is configured to determine the degree of wear of the distal end of the tool from the difference between the current value during the forward stroke and the current value during the return stroke within a predetermined range of a cutting thickness in a direction parallel to the direction of movement of the workpiece.

15. The machine tool according to claim 13, wherein a relationship between the difference and the degree of wear is established in advance, and the determination means is configured to determine the degree of wear from the relationship established in advance.
